# NOUVEAU FASCICULE DE BREVET EUROPEEN

(11) **EP 0 263 862 B2**
(45) Date de publication et mention de la décision concernant l'opposition: **10.04.1996**
(45) Mention de la délivrance du brevet: 13.11.1991
(21) Numéro de dépôt: 87902539.3
(22) Date de dépôt: 08.04.1987
(51) Int. Cl.: B65D 81/09

(54) **PROCEDE, DISPOSITIF ET PRODUIT MATELASSE DE MAINTIEN D'UN OBJET**
VERFAHREN, VORRICHTUNG UND GEPOLSTERTES PRODUKT FÜR DIE UNTERSTÜTZUNG EINES GEGENSTANDES
METHOD, DEVICE AND PADDED PRODUCT FOR MAINTAINING AN OBJECT

(30) Priorité: 09.04.1986 FR 8605317; 26.08.1986 FR 8612091
(43) Date de publication de la demande: 20.04.1988
(73) Titulaire: CONSTRUCTIONS INDUSTRIELLES DE LA MEDITERRANEE- CNIM, F-75008 Paris (FR); LEPINOY INDUSTRIE, F-21000 Dijon (FR)
(72) Inventeur: LEPINOY, Dominique, F-21000 Dijon (FR)
(74) Mandataire: Martin, Jean-Jacques
(86) Numéro de dépôt international: FR8700115
(87) Numéro de publication internationale: WO8706209

(56) Documents cités:
- WO-A-85/01272
- DE-A- 2 018 605
- FR-A- 2 449 050
- FR-A-12 704 43
- FR-A-14 371 94
- FR-A-15 531 80
- FR-A-21 900 96
- FR-A-24 932 68
- FR-A-45 690 82
- GB-A- 341 910
- GB-A- 533 932
- GB-A- 1 095 311
- GB-A- 2 126 079
- GB-A- 2 148 093
- US-A- 3 515 267
- US-A- 4 190 158
- US-A- 4 274 169
- US-A- 4 426 945
- RETTUNGSDIENST, Vol. 3, No. 9, Mars 1986

## Description

L'invention concerne d'une manière générale le maintien d'un objet ou d'un corps au moyen d'un matériau granulaire placé dans une enceinte étanche mise en dépression.

Le principe de la rigidification par dépression d'une poche à parois souples contenant des granules est connu, notamment par le document FR-A-1 270 443 qui en divulgue des applications médicales (ligatures) et parle document FR-A-1 437 194 qui en divulgue des applications à l'emballage. On suppose, dans la présente demande, connu l'enseignement de ces deux documents.

Un inconvénient lié à la technique décrite dans les documents précités est que le matériau granulaire, disposé en vrac, dans les enceintes étanches, a tendance à s'accumuler irrégulièrement dans une région de l'enceinte, sous l'effet de la pesanteur par exemple, tant que la rigidification n'est pas obtenue au moins partiellement.

US-A-3 762 404 décrit un dispositif de maintien d'un objet évitant cet inconvénient en ce qu'il comporte :
- une enceinte étanche présentant des parois souples, associée à des moyens pour sa mise en dépression,
- un matériau granulaire placé dans l'enceinte,
- des éléments de retenue du matériau granulaire en place dans l'enceinte en dehors de toute dépression, permettant d'assurer une épaisseur sensiblement constante à l'enceinte, lesdits éléments de retenue étant souples, perméables au gaz mais imperméables au matériau granulaire.

Dans ce dispositif connu, les éléments de retenue sont constitués par plusieurs cloisons qui raccordent mutuellement les parois de l'enceinte à travers le matériau granulaire, par ailleurs retenu par les parois de l'enceinte elles-mêmes en pratique, les cloisons de retenue du matériau granulaire sont soudées sur les parois de l'enceinte.

Il résulte de cette conception des éléments de retenue une grande complexité de réalisation de l'enceinte étanche, la soudure des cloisons séparément sur chacune des parois de celle-ci étant particulièrement difficile à réaliser dans de bonnes conditions.

En outre, cette conception aboutit à superposer localement à la périphérie de l'enceinte, c'est-à-dire là où ses parois en elles-mêmes étanches doivent être assemblées de façon étanche; en pratique par soudure, non seulement ces parois mais également les cloisons, ce qui rend difficiles l'assemblage lui-même et a fortiori l'obtention de son étancheité ; cet inconvénient est d'autant plus marqué que le matériau granulaire a naturellement tendance à s'échapper de l'enceinte lors de cet assemblage, ce qui nécessite la prise de précautions à cet égard ; en effet, si ces précautions sont insuffisantes, le matériau granulaire s'intercale dans la zone d'assemblage et il en résulte une absence d'étanchéité de l'enceinte et par conséquent la mise au rebut du dispositif.

Outre ces inconvénients, rencontrés lors de sa fabrication, ce dispositif connu présente également des inconvénients lors de son utilisation.

L'un de ces inconvénients réside dans une certaine vulnérabilité, l'assemblage soudé de chaque cloison à chaque paroi de l'enceinte pouvant créer dans celle-ci un affaiblissement localisé.

Un autre de ces inconvénients réside dans le fait qu'il est difficile de rendre un dispositif réalisé selon cette conception connue à la fois facile à façonner à volonté en l'absence de dépressurisation de l'enceinte étanche et sensiblement uniforme dans son épaisseur. En effet, soit ce dispositif connu présente une épaisseur sensiblement uniforme, en raison d'un remplissage pratiquement complet de l'enceinte en matériau granulaire, mais il ne peut alors être aisément plié en raison d'un effet d'entretoisement créé par les cloisons de retenue entre les parois de l'enceinte, n'autorisant pratiquement pas de "glissement" entre celles-ci et le matériau granulaire, et une tentative de pliage prononcé peut alors aboutir purement et simplement à la destruction de l'enceinte étanche notamment au niveau de la solidarisation des doisons de retenue avec ses parois ; soit on remplit peu l'enceinte en matériau granulaire pour faciliter le pliage du dispositif mais le matériau granulaire n'est alors retenu que de façon trop lâche pour que le dispositif présente une certaine homogénéité d'épaisseur ; on pourrait probablement concilier la possibilité d'un remplissage pratiquement complet de l'enceinte en matériau granulaire, garant d'une épaisseur homogène du dispositif, avec une facilité de pliage du dispositif en l'absence de dépressurisation de l'enceinte en réalisant aussi bien les parois de l'enceinte que les cloisons de retenue en matériaux particulièrement extensibles élastiquement, mais ceci conduirait à une grande difficulté de rigidification du dispositif par dépressurisation de l'enceinte étanche.

On connait également un dispositif de maintien d'un objet, du type utilisant :
- une enceinte étanche présentant des parois souples, associée à des moyens pour sa mise en dépression,
- un matériau granulaire placé dans l'enceinte,
- des éléments de retenue du matériau granulaire en place dans l'enceinte en dehors de toute dépression, lesdits éléments de retenue étant constitués par un matelas de boudins juxtaposés réalisés par des parois en un matériau souple, perméable au gaz mais imperméable au matériau granulaire, qui est logé dans les boudins, et assurant seuls la retenue du matériau granulaire indépendamment des parois de l'enceinte elle-même.

Un dispositif de ce type a été fabriqué et commercialisé par les Sociétés Suédoises AB GERMA et CAMP SCANDINAVIA AB, dans un mode de réalisation dans lequel un faible remplissage en matériau granulaire, associé à une retenue particulièrement lâche de celui-ci, donnait naissance à des lacunes importantes dans le matériau granulaire et des accumulations localisées également importantes de celui-ci. Il en résultait pour ce dispositif connu, lorsque l'enceinte étanche se trouvait intérieurement à la pression atmosphérique, une épaisseur très irrégulière qu'il conservait après dépressurisation de l'enceinte étanche ; il en résultait également une impossibilité de rigidifier intégralement ce dispositif lors de la dépressurisation, puisque les zones localisées dont le matériau granulaire était absent ou pratiquement absent conservaient alors nécessairement la souplesse de l'enveloppe et des éléments de retenue, à savoir un filet ; il en résultait enfin la formation de plis irréguliers dans l'enveloppe lors de la dépressurisation.

Selon un premier aspect, la présente invention propose quant à elle un dispositif de ce type, toutefois caractérisé par un remplissage complet des boudins en matériau granulaire, permettant d'assurer une épaisseur sensiblement constante à l'enceinte.

Selon un deuxième aspect, la présente invention propose un dispositif de maintien d'un objet, du type utilisant également :
- une enceinte étanche présentant des parois souples, associée à des moyens pour sa mise en dépression,
- un matériau granulaire placé dans l'enceinte,
- des éléments de retenue du matériau granulaire en place dans l'enceinte en dehors de toute dépression, lesdits éléments de retenue étant souples, perméables au gaz mais imperméables au matériau granulaire, et assurant seuls la retenue du matériau granulaire indépendamment des parois de l'enceinte elle-même,
ce dispositif étant quant à lui caractérisé en ce que les éléments de retenue sont constitués par des parois en un matériau fibreux poreux, permettant d'assurer une épaisseur sensiblement constante à l'enceinte.

Selon l'invention, le matériau granulaire est disposé dans des éléments de retenue réalisant, selon le premier aspect de l'invention et selon un mode de mise en oeuvre préféré de son deuxième aspect, un compartimentage du volume intérieur de l'enceinte. Ce compartimentage a pour effet de retenir le matériau granulaire à sa place, même lorsque l'enceinte est à la pression atmosphérique, et de lui garantir une épaisseur sensiblement constante, gage de son efficacité. L'efficacité est en effet fonction, pour une géométrie et un poids donnés de l'objet, de l'épaisseur de la protection granulaire et de la dépression.

Ces éléments de retenue sont constitués de manière indépendante de l'enceinte, et disposés à l'intérieur de l'enceinte.

Ces éléments sont naturellement imperméables au matériau granulaire qu'ils retiennent, mais perméables à l'air pour que la mise en dépression de l'enceinte puisse se faire très simplement. Selon le premier aspect de l'invention, les éléments de retenue sont constitués par un matelas de boudins juxtaposés remplis dudit matériau granulaire. Ces boudins sont réalisés par des parois en un matériau souple, avantageusement une nappe textile (tissée, tricotée, ou obtenue autrement) que ses éléments constitutifs ou sa technique de fabrication rendent partiellement élastique dans une direction unique, celle qui est transverse à la direction longitudinale des boudins.

Ce produit matelassé conforme à l'invention, conçu avant tout pour le remplissage compartimenté des enceintes étanches à dépression, de quelque type qu'elles soient, possède des qualités intrinsèques, qui permettent de l'utiliser dans bien d'autres applications, notamment lorsqu'il est constitué de boyaux en tissu très aéré (gaze maillée) remplis de billes de polystyrène expansé.

Un procédé de fabrication de ce produit matelassé consiste à assembler deux nappes par des coutures longitudinales fermées par une couture transversale, et à injecter dans les boyaux borgnes ainsi obtenus le matériau granulaire.

Celui-ci est de préférence injecté horizontalement au moyens de tuyaux dont l'extrémité amont, placée au sein d'une réserve de matériau particulaire, reçoit un jet d'air comprimé délivré par un injecteur.

Un autre inconvénient des dispositifs divulgés dans les documents FR-A-1 270 443 et 1 437 194 ainsi que US-A-3 762 404, est qu'ils ne permettent pas d'obtenir une contention compressive.

L'invention se propose également de remédier à cet inconvénient par une disposition générale permettant d'améliorer considérablement les possibilités d'utilisation des poches à dépression.

Selon l'invention, la poche comporte, accolée à l'enceinte de dépression dans le sens de son étendue, au moins une seconde enceinte étanche, qui peut être remplie d'un fluide, de granules ou d'un mélange des deux, selon les applications envisagées.

La première enceinte est de préférence compartimentée, dans le sens de son étendue, de manière à s'opposer à une trop grande liberté des granules. Dans le même but, on peut prévoir un matériau de maintien des granules, de préférence un matériau fibreux de piégeage des granules.

L'invention s'applique tout particulièrement à la réalisation d'emballages et de dispositifs de contention, ainsi qu'à celle de matelas, notamment de matelas anti-escarres.

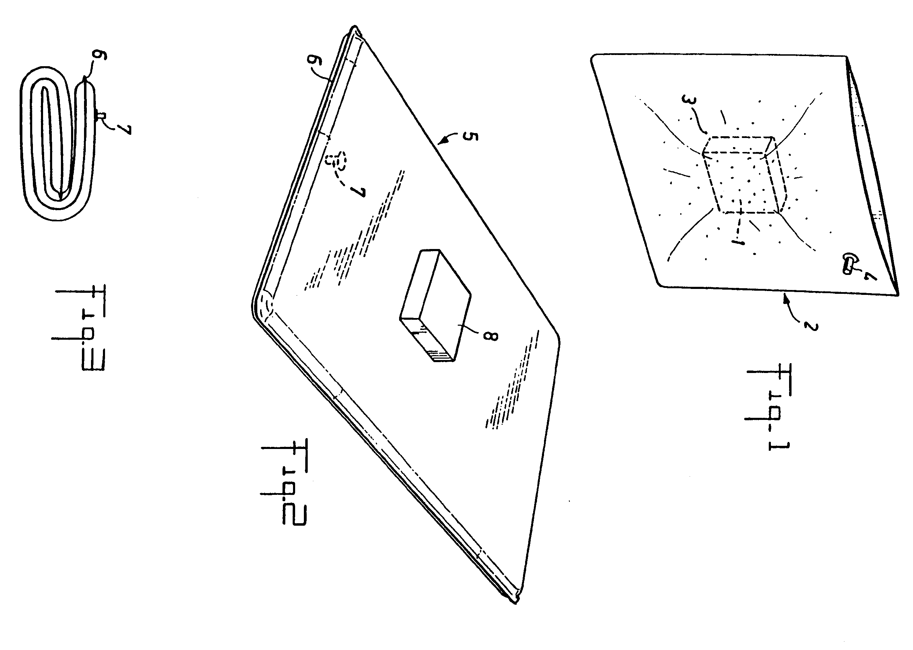

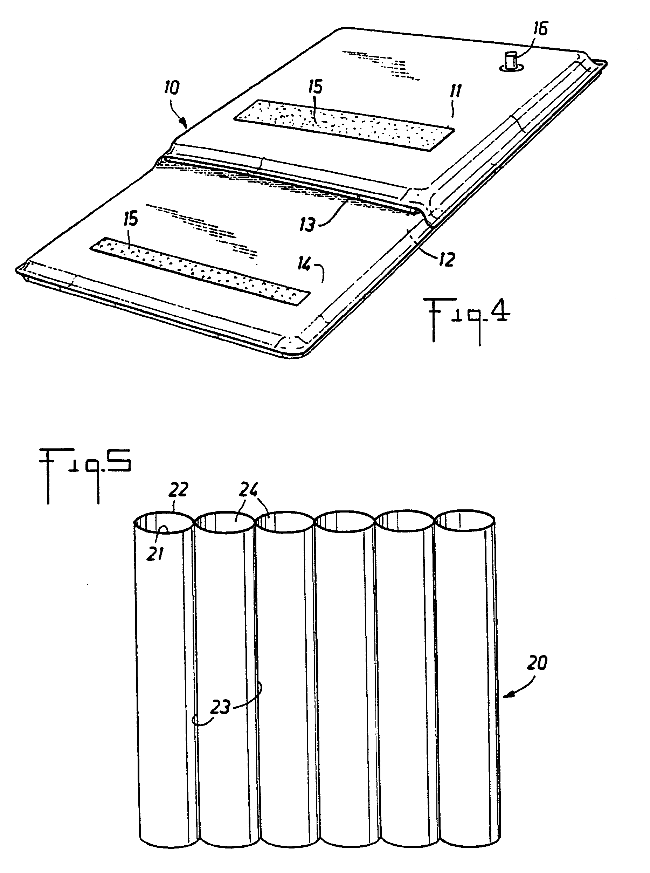

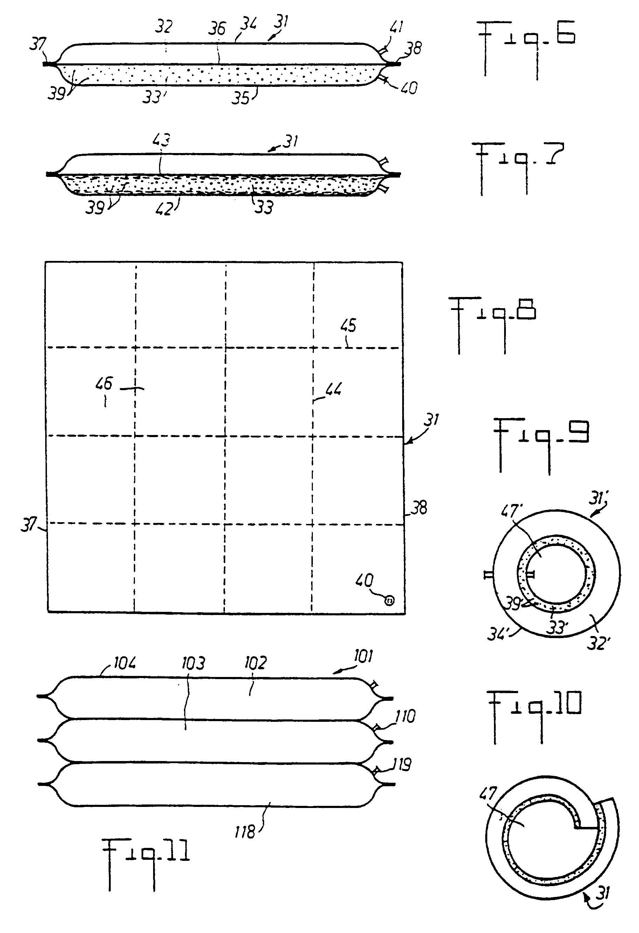

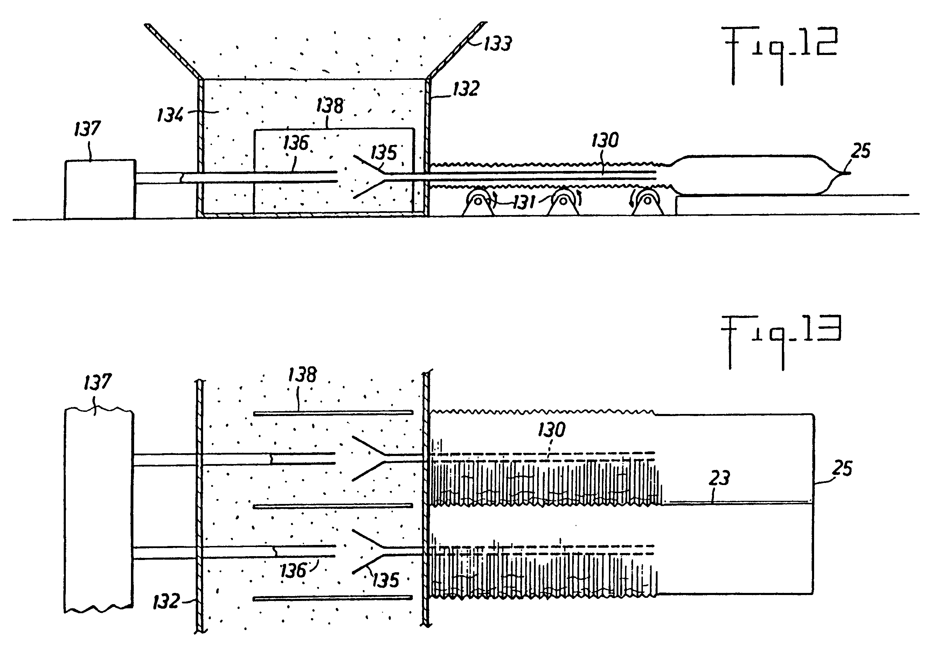

D'autres caractéristiques et avantages de l'invention ressortiront de la description suivante de plusieurs modes de réalisation. Il sera fait référence aux dessins annexés sur lesquels :
. la figure 1 représente une pochette pour la mise en oeuvre d'un premier procédé de maintien et d'emballage d'un objet.
. la figure 2 représente un matelas disposé à plat, pour la mise en oeuvre d'un second procédé de maintien et d'emballage d'un objet.
. la figure 3 représente, vu de côté, le matelas de la figure 2 après son enroulement sur l'objet.
. la figure 4 représente une enceinte d'emballage conformée en enveloppe.
. la figure 5 représente le produit matelassé spécialement destiné au remplissage des enceintes conformes à l'invention.
. la figure 6 est une vue en coupe schématique d'un premier mode de réalisation d'une enceinte multiple.
. la figure 7 est une vue en coupe schématique d'un deuxième mode de réalisation d'une enceinte multiple.
. la figure 8 est une vue en plan schématique d'un troisième mode de réalisation d'une enceinte multiple.
. la figure 9 montre l'application d'un quatrième mode de réalisation d'enceinte multiple à un emballage.
. la figure 10 montre l'application du premier mode de réalisation d'enceinte multiple à un emballage.
. la figure 11 montre en coupe schématique un cinquième mode de réalisation d'enceinte multiple destiné à former un matelas anti-escarres.
. les figures 12 et 13 sont des vues schématiques en élévation et en plan d'une installation de remplissage de produit matelassé de la figure 5.

Selon la figure 1, l'objet 1 à maintenir est placé à l'intérieur d'un sac ou pochette 2, fermé sur trois côtés, contenant également le matériau granulaire 3 disposé en vrac autour de l'objet 1.

La pochette peut être du type utilisé pour le conditionnement sous vide, et être en matériau souple et étanche, tel que le polyuréthane ou le chlorure de polyvinyl ou d'autres matières plastiques équivalentes, éventuellement disposées en plusieurs épaisseurs.

Après mise en place de l'objet et du matériau granulaire dans le sac, le côté ouvert de celui-ci est fermé de manière étanche par n'importe quel procédé (collage, adhésif double-face, soudure haute-fréquence ou thermo-soudure), pouvant mettre en oeuvre une presse à machoires rigides ou semi-rigides assurant la compression des deux bords du sac l'un sur l'autre.

Un autre procédé consiste à rabattre l'extrémité ouverte du sac en deux plis, puis, par un nouveau rabattement, en quatre plis, puis en huit, etc., et à réaliser un cerclage compressif de ces plis.

On peut utiliser le sac et le procédé de fermeture décrits dans le document FR-A-2 493 268, dont on incorpore ici l'enseignement par référence.

Le sac comporte un embout 4 comprenant de manière connue en soi, une valve permettant, en coopération avec des moyens de dépression (pompe à vide), la mise en dépression de l'enceinte étanche constituée par l'intérieur du sac, et le maintien de la dépression obtenue.

Lors de la dépression, l'objet se trouve pris à l'intérieur de l'agglomérat de matériau de contention réalisé par la pression différentielle entre la pression atmosphérique et la pression résiduelle à l'intérieur du sac. Le matériau granulaire peut alors épouser complètement les contours de l'objet et améliorer considérablement la contention. L'objet est ainsi entouré d'une masse compacte non fragile. En tout point de l'objet, situé au coeur de l'agglomérat de contention, la résultante des forces appliquées sur celui-ci est nulle, en raison de l'isotropie des directions des forces appliquées par la pression atmosphérique.

Pour l'emballage d'objets très fragiles et creux, présentant une ouverture étranglée (théière par exemple), on peut prendre la précaution supplémentaire de remplir l'objet d'un matériau léger, incompressible.

Le matériau granulaire fin de contention peut être de divers types : concassé de liège, sciure, vermiculite. Mais de manière particulièrement avantageuse, il s'agit de billes de polystyrène expansé.

Selon le principe d'emballage exposé en regard des figures 2 et 3, l'objet à protéger n'est plus mis à l'intérieur de l'enceinte étanche, mais lui reste extérieur.

L'enceinte peut consister en une sorte de matelas étanche 5 contenant le matériau granulaire. Le matelas peut être constitué de deux films de PVC (2/10 à 3/10'mm d'épaisseur) soudés sur toute leur périphérie 6, par exemple par soudage haute fréquence, et renfermant le matériau granulaire, de préférence des billes de polystyrène.

Afin d'éviter une malléabilité excessive du matelas 5, une légère dépression a été produite dans l'enceinte (grâce à l'embout 7 muni d'une valve) préalablement à son utilisation, ce qui rigidifie légèrement l'ensemble.

L'objet à protéger 8 est placé sur le matelas, et le matelas est enroulé manuellement sur lui-même et moulé autour de l'objet (fig.3). On effectue alors un nouveau pompage plus poussé (par exemple jusqu'à 800mbar) pour rendre l'ensemble rigide, et assurer le maintien et la protection de l'objet.

Il suffit de faire rentrer l'air atmosphérique par la valve pour libérer l'objet emballé, et disposer du matelas réutilisable.

Le matelas 5 peut avoir des formes et dimensions diverses et être utilisé non seulement pour entourer complétement un objet, mais aussi pour le protéger partiellement : par exemple des matelas peuvent être moulés en cornières de protection sur les bords d'un tableau à transporter. Des matelas longs et étroits (par exemple 2m x 0,13m) peuvent être utilisés pour former des bandages de contention. Des essais ont montré que la contention obtenue n'est pas sensiblement compressive. Un ruban auto-agrippant permet de solidariser chaque enroulement du bandage sur le précédent. L'épaisseur de la bande est maintenue constante grâce au compartimentage intérieur par produit matelassé décrit. plus loin. Si une compression importante est nécessaire, on associe l'enceinte étanche de la bande à une seconde enceinte gonflable, selon un mode de réalisation qui sera décrit plus loin. D'autres applications peuvent être envisagées pour le serrage (en vue d'un collage par exemple), pour des manchons hémostatiques (on fait alors subir un traitement antiseptique au préalable).

Selon un mode de réalisation représenté fig.4, l'enceinte étanche est conformée en enveloppe 10 dont les parois avant 11 et arrière 12 sont doubles de manière à ménager entre leur double pli le volume de l'enceinte et contiennent les billes. On glisse l'objet à protéger dans l'ouverture 13 de l'enveloppe entre les parois doubles 11 et 12, on ramène le rabat double 14 sur la paroi avant 11 à laquelle il s'accroche par un dispositif d'accrochage rapide, par exemple deux bandes complémentaires du type velours-crochet 15. Il suffit de faire le vide par l'embout 16 pour que l'enveloppe 10 se rigidifie autour de l'objet à protéger. L'enveloppe 10 peut comporter sur sa paroi extérieure des indications permettant son acheminement par les postes. Dans ce mode de réalisation, comme dans les précédents, il peut être judicieux de réaliser chacun des plis, ou l'un au moins des plis, des doubles parois en y intégrant une feuille d'aluminium qui évite les transferts thermiques par radiation (les transferts par convection étant naturellement supprimés lors du moulage) et rend l'emballage très isotherme.

Les dépressions instaurées dans les enceintes conformes à l'invention dépendent de la dureté désirée du cocon protecteur formé par le matériau granulaire rigidifié. Des sacs mis sous une dépression de 200 mbar ont donné parfaite satisfaction pour la protection des objets très fragiles. Mais des dépressions faibles sont envisagées quand on recherche des effets visco-élastiques.

L'emballage obtenu selon l'un quelconque des modes de réalisation précédents peut être associé à des éléments gonflables pour être placé dans un conteneur (cf. les documents FR-A-1 553 180, FR-A-2 190 096, FR-A-2 574 639).

Qu'il s'agisse du procédé de la figure 1 ou de celui des figures 2 à 4, à l'intérieur de l'enceinte sont disposés des éléments de retenue du matériau granulaire, réalisant un compartimentage du volume intérieur de l'enceinte s'opposant à une accumulation excessive du matériau dans une région particulière dudit volume, sous l'effet de la pesanteur par exemple, avant la mise en dépression. Ce compartimentage doit être imperméable au matériau granulaire et perméable aux gaz (à l'air) de manière à permettre la mise en dépression de l'ensemble par une seule opération.

Le compartiment est réalisé indépendamment des parois étanches de l'enceinte sous la forme d'un matelas 20 de boudins juxtaposés, formé d'un matériau souple imperméable au matériau granulaire, et remplis dudit matériau granulaire. Ce matelas 20 est ensuite glissé dans l'enceinte étanche, seul ou avec d'autres matelas.

La figure 5 montre un tel produit matelassé 20. Il est réalisé par l'assemblage de deux nappes 21,22 de tissu (en nylon ou fibres de polyester par exemple) souple et aéré (de manière à être perméable à l'air) aux moyens de coutures parallèles longitudinales 23 délimitant entre elles des boyaux 24 qui sont remplis à force de billes de polystyrène de manière à former des boudins juxtaposés. Le tissu (ou toute autre paroi en non-tissé, en matière textile, voire minérale ou métallurgique) est avantageusement réalisé par un maillage extensible en direction transversale aux boudins. Ceci donne une certaine élasticité transversale aux boudins qui permet de maintenir une pression de serrage permanente sur le matériau contenu, donne une meilleure tenue au matelas et le rend plus malléable.

En revanche, le tissu est de préférence pratiquement inextensible dans le sens longitudinal, de sorte que le matelas ne se déforme pas lorsqu'il est suspendu.

La grandeur des mailles est inférieure aux dimensions du matériau granulaire contenu : lorsqu'il s'agit de billes de polystyrène pré-expansé, le diamètre de celles-ci est généralement de l'ordre d'un à deux millimètres. Lorsque le matelas est utilisé à l'intérieur d'une enveloppe de dépression, la grandeur des malles est choisie suffisamment grande, compte tenu des limitations précédentes, pour permettre une mise en dépression la plus rapide possible.

Les piqûres 23 sont généralement régulièrement espacées, par exemple de 5 ; 7,5 ou 10 cm, correspondant à un diamètre des boudins 24 de 3,2 ; 4,8 et 6,6 cm.

Le produit matelassé 20 conforme à l'invention, quoique avantageusement utilisé en association avec des enceintes étanches, peut aussi être utilisé en tant que tel pour les applications les plus diverses.

Il peut servir de couverture d'isolation (piscines, poids lourds, conteneurs), de revêtement apparent ou caché pour murs, plafonds, sols (sous chappe coulée) avec un effet d'isolation phonique et thermique, et un effet décoratif original.

Il peut servir à confectionner des tentures, couvre-lits, des sur-matelas et des oreillers (éventuellement jetables) en raison de leur contact agréable produisant un effet de micro-massage, répartissant les pressions, donnant une sensation de chaleur aérée. Il peut servir à la fabrication de vêtements isothermes (éventuellement durcissables en association avec une enveloppe étanche et applicables au scaphandres), de casques, jambières, gants ou protections diverses (notamment pour des travaux sous vibrations). Il peut aussi être utilisé pour former des couches ou litières pour animaux.

En fonction des applications visées, les billes de polystyrène peuvent recevoir un traitement de coloration, antistatique, anti-puces, anti-septique ou autres. Par exemple, le produit matelassé de l'invention, après traitement antiseptique, peut servir de matelas anti-escarres. Il est avantageux que les nappes textiles soient perméables aux liquides, afin que le matelas servent au drainage des liquides éventuellement recueillis.

Quoique les billes de polystyrène pré-expansé constituent le matériau de remplissage préféré, d'autres matériaux légers et résilients sont équivalents.

Ainsi qu'on l'a mentionné plus haut, l'enceinte de dépression conforme à l'invention est avantageusement associée à au moins une seconde enceinte étanche, contenant un fluide ou des granules.

Sur la figure 6, la poche 31 comporte deux enceintes adjacentes 32 et 33 définies par des parois souples et déformables extérieures 34 et 35 et intérieure 36, dont les bords latéraux 37,38 et longitudinaux sont assemblés de manière étanche les uns sur les autres par collage, soudure autogène, ou autrement.

L'enceinte 33 contient une multiplicité de billes 39, par exemple en polystyrène expansé, disposées en vrac et en quantité suffisante pour former une certaine épaisseur.

Les enceintes 32 et 33 comportent des valves 40 et 41, connectables à des moyens de mise en dépression ou en compression à l'aide d'un fluide liquide ou gazeux, notamment une pompe à air double effet.

L'enceinte 33 contenant les billes est destinée à être mise en dépression de manière à se rigidifier en conservant la forme naturelle ou imposée qu'elle a avant sa mise en dépression.

Quant à l'enceinte 32, son remplissage est fonction des utilisations prévues pour la poche comme cela sera expliqué plus loin.

Sur la figure 7, on a représenté un perfectionnement de la poche de la figure 6, selon lequel l'enceinte 33 comporte deux couches 42,43 d'un matériau fibreux, tel qu'une ouate synthétique, entre lesquelles sont disposées les billes en vrac 39. Les billes ont moins tendance que dans le mode de réalisation de la figure 6 à se rassembler dans une région de l'enceinte lors de la manipulation de la poche non encore en dépression, en raison du fait qu'elles restent légèrement prisonnières des fibres qui dépassent des couches 42 et 43 de matériaux fibreux et que, du moins pour certaines matières constitutives des billes et du matériau fibreux, des phénomènes d'électricité statique se développent qui les maintiennent en place. Naturellement, le matériau fibreux 42,43 est poreux et s'écrase lors de la mise en dépression de l'enceinte 33, mais il reprend son volume grâce à son élasticité si la dépression cesse.

Ce maintien des billes en place est encore amélioré, s'il est prévu un compartimentage de la poche 31, ou au moins des matériaux de maintien 42,43 de l'enceinte 33, dans son étendue, par exemple au moyen de piqûres 44,45 parallèles aux bords latéraux 37,38 et longitudinaux. Ces piqûres 44,45 rapprochent les couches 42,43 l'une de l'autre et définissent des compartiments 46 pratiquement étanches en ce qui concerne le passage des billes mais non étanches pour les fluides : ils ne s'opposent donc pas à la mise en dépression de toute l'enceinte 33 à l'aide d'une seule valve 40. D'autres rnoyens de compartimentage peuvent intéresser les parois 34,35,36 du moment qu'ils ne nuisent pas à l'étanchéité de celles-ci.

En particulier, le mode préféré de réalisation d'un compartimentage est celui qui consiste à introduire un produit matelassé du type décrit précédemment, en liaison avec la figure 5.

La forme et les dimensions des poches peuvent être quelconques et dépendent des utilisations.

Elles peuvent ainsi être planes, rectangulaires ou carrées, comme représenté aux figures 6 à 8, ou cylindriques comme montré sur la figure 9 où l'on voit la poche 31' comportant une enceinte intérieure 33' remplie de billes 39' et une enceinte extérieure 32', délimitées par des parois souples et déformables, sauf, éventuellement la paroi extérieure 34' de l'enceinte 32' qui, pour certaines applications, peut être relativement rigide, et former comme l'extérieur d'une boîte. Notamment dans ce mode de réalisation, on peut prévoir que ladite boite incorpore en elle-même des moyens simples de pompage double-effet permettant la mise en dépression d'une des enceintes et la mise en compression de l'autre.

La poche 31' de la figure 9 peut notamment servir à l'emballage d'objets fragiles disposés dans l'espace intérieur 47'. On commence par placer l'objet dans cet espace alors que les enceintes 32',33' sont à la pression atmosphérique ; on met ensuite en dépression l'enceinte 33 à billes et, simultanément, on met en pression l'enceinte 32', éventuellement d'ailleurs en faisant passer l'air expulsé de l'enceinte 33' vers l'enceinte 32'. De la sorte, l'enceinte 33' se rigidifie autour de l'objet placé dans l'espace 47' et cette coque rigide se trouve suspendue pneumatiquement par l'intermédiaire de l'enceinte gonflée 32'.

Selon le degré et/ou le rythme d'installation de la surpression dans l'enceinte 32' par rapport à la mise en dépression de l'enceinte 33', on peut améliorer le moulage de celle-ci, encore non totalement rigidifiée, sur l'objet enveloppé.

Ce dispositif à l'avantage de laisser une présentation externe régulière, pouvant se caler dans n'importe quel type d'emballage (boîtes en carton, valise spéciale de transport, etc.).

Un même dispositif convient par exemple à la réalisation d'attelles ou de dispositif de contention d'un membre.

Pour certaines applications, on peut prévoir que l'enceinte à dépression soit placée à l'extérieur, et l'enceinte à surpression à l'intérieur.

Un inconvénient du dispositif de la figure 9 est qu'il nécessite d'être réalisé en plusieurs dimensions en fonction de celles des objets à envelopper.

Aussi est-il plus avantageux d'utiliser une poche 31 du type de celle des figures 6 à 8, éventuellement en forme de bande, qu'on enroule autour d'un objet placé dans l'espace intérieur ainsi formé. La poche 31 peut être pourvue de moyens de fixation au moins provisoire, dans l'attente de la rigidification résultant de la mise en dépression. De tels moyens peuvent consister notamment en une bande auto-agrippante dont les éléments velours et crochets sont respectivement prévus sur les faces 34 et 35 (ou vice versa) de la poche.

La figure 11 représente en coupe une poche 101 à trois enceintes étanches contigues destinée à former, seule ou en association avec d'autres poches semblables, un matelas anti-escarres.

Les enceintes peuvent être réalisées séparément et solidarisées après superposition, de manière définitive (collage, soudure, etc.) ou amovible (au moyen d'adhésifs amovibles).

L'enceinte centrale 103 est remplie de billes en matériau résilient et comporte une valve 110 de mise en dépression. Cette enceinte est destinée à réaliser le moulage du patient, selon un procédé connu en soi, mais dans des conditions nettement améliorées grâce à la présence de l'enceinte inférieure 118, munie d'une valve 119, remplie d'un liquide ou d'un mélange de liquide et de billes et destinée à renvoyer vers la personne qui s'appuie une pression uniforme. La forme ainsi moulée contribue à la diminution de l'effet ischémique. L'enceinte supérieure 102, au contact avec le patient, est initialement vide pendant le processus de dépressurisation de l'enceinte centrale 103. On la remplit ensuite d'un fluide de façon à former une sorte de coussin entre l'enceinte centrale rigidifiée et le patient, améliorant le confort, constituant comme une poche synoviale dans une articulation et donc diminuant les forces de frottement et de cisaillement à l'origine de l'escarre. On peut aussi remplir l'enceinte 102 d'un mélange de billes et de liquide, qu'on met ensuite en légère dépression dont le degré est réglé pour obtenir la souplesse, le moelleux désirés. La paroi 104 de l'enceinte 102, en contact avec le patient, est choisie pour ses qualités de confort physiologique et psychologique ; elle doit être en matériau élastique suffisamment épais et/ou rigide pour ne pas former de plis.

La poche 31 de la figure 6 peut aussi être utilisée pour les moulages. Dans ce cas, on gonfle légèrement l'enceinte 32 et on met en dépression légère l'enceinte 33 de manière à obtenir une couche visco-élastique. La poche est mise à plat, l'enceinte gonflée d'air étant en dessous pour répartir les pressions quand le corps du patient est installé sur l'enceinte granulaire. Quand le corps est dans la position de moulage recherchée, il suffit de faire un vide substantiel dans l'enceinte 33 pour figer la forme.

La poche 31 ci-dessus décrite, avec ses effets visco-élastiques, peut aussi servir de matelas anti-escartes, ou de matelas pour enfants prématurés, etc.

Naturellement, toutes les dispositions montrées sur les figures 6 et 7 sont avantageusement transposées au mode de réalisation de la figure 11. Le compartimentage conforme à la figure 8 permet notamment d'obtenir que l'enceinte rigidifiée 103 se comporte comme une pluralité de "facettes" rigides présentant entre elles une légère articulation ; il s'ensuit que le matelas anti-escarres de l'invention épouse parfaitement la forme du patient dans la position où le moulage a été réalisé, mais qu'il tolère aussi des variations de position du patient.

Les figures 12 et 13 illustrent le principe d'une machine destinée à fabriquer le produit matelassé de la figure 5.

On a préalablement procédé à l'assemblage à plat des deux nappes 21 et 22 par piqûres parallèles 23 au moyen d'une machine à coudre pouvant travailler simultanément sur toute la largeur des nappes (par exemple 1,60m ou 3,20m), et par une piqûre transversale d'extrémité 25 destinée à fermer un côté du matelas.

On introduit ensuite dans l'ouverture laissée libre des boyaux parallèles ainsi formés l'extrémité de tuyaux de remplissage 130. En fait, selon le mode de réalisation représenté fig.12 et 13, on enfile les boyaux autour des tuyaux de remplissage 130, et on les retrousse complètement sur lesdits tuyaux 130, grâce à des rouleaux 131 recouverts d'un matériau de friction adapté au tissu des nappes et susceptibles de tourner dans le sens des flèches (fig.12), jusqu'à ce que le fond des boyaux correspondant à la couture 25 arrive sensiblement au niveau de l'extrémité des tuyaux de remplissage 130.

Les tuyaux 130 peuvent être en partie flexibles, ou être rigides. Dans ce cas, leur écartement doit être celui des boudins à l'état gonflé.

On procède alors à l'injection du matériau granulaire dans les boyaux, ce qui a pour effect de repousser au fur et à mesure de leur remplissage les boudins gonflés, vers la droite sur les figures 12,13.

Les rouleaux 131 sont utilisés pour freiner le recul du matelas et de permettre son remplissage uniforme et légèrement en pression (mettant le tissu des nappes en extension).

Une fois remplie, la longueur désirée du produit matelassé, il suffit de fermer son extrémité ouverte, par exemple par une nouvelle couture transversale.

L'extrémité de décharge des tuyaux 130 peut être cylindrique ou de préférence en entonnoir, ce qui favorise l'injection des matériaux de faible densité et permet de déjà mettre le tissu en extension sur l'entonnoir.

On peut imaginer qu'au lieu d'avoir à effectuer au préalable l'assemblage des deux nappes 21,22, par les coutures longitudinales parallèles, celui-ci se fasse simultanément au remplissage, un peu en amont de celui-ci, par l'amenée en continue des nappes 21,22 par le haut et le bas, leur couture longitudinale en continu, et, à des intervalles prédéterminés, leur fermeture transversale.

Les fermetures transversales sont réalisées :
. par couture (au moyen d'une surjeteuse ou d'une machine à point de chainette),
. par thermosoudure avec apport de matière telle que le polyéthylène, si le tissu du matelassage est assez fin et aéré,
. par collage, à l'aide de résine diverses,
. par agraffage sur revers,
. par presse-vapeur permettant de compacter et de souder le polystyrène aux têtes de sac sur une largeur d'un centimètre.

L'alimentation des tuyaux 130 en matériau granulaire se fait avantageusement comme suit.

Une boite d'alimentation 132 disposée sous une trémie 133, reçoit le matériau particulaire 134 envrac. Les extrémités amont des tuyaux 130 sont disposées horizontalement dans cette boite 132 et comportent une entrée en entonnoir 135. Coaxialement à ces entrées 135 et en amont, des injecteurs 136, alimentés par une conduite commune 137 reliée à une source d'air sous pression, injectent un jet d'air sous pression qui entraîne avec lui le matériau particulaire environnant et la force à pénétrer dans l'entonnoir 135 et les tuyaux 130. Ceux-ci sont de diamètre supérieur à celui des injecteurs 136 : l'écoulement du fluide est ainsi facilité et provoque un phénomène d'aspiration par les entonnoirs 135. Les injecteurs 136 peuvent être à une certaine distance des entonnoirs 135, ou, quand les diamètres respectifs le permettent sans restriction excessive du passage laissé au matériau granulaire, être emboîtés dans les tuyaux 130, provoquant une aspiration encore plus grande. Dans un mode de réalisation destiné à l'alimentation en billes de polystyrène expansé, on a trouvé que la configuration suivante donnait satisfaction : le diamètre des injecteurs 136 est de 6mm, celui des tuyaux 130 de 14 mm et le plus grand diamètre des entonnoirs 135 est de 24mm : une distance de 18mm sépare les injecteurs 136 des entonnoirs 135. Afin d'éviter les interférences des turbulences possibles au voisinage de la sortie des injecteurs 136, des cloisons séparatrices 138 sont prévues dans la boite 132 entre les injecteurs 136 et entonnoirs 135 voisins.

Le procédé de remplissage du produit matelassé décrit ci-dessus est particulièrement avantageux en ce qu'il a peu ou pas d'inertie, qu'il permet un remplissage uniforme et procède à un gavage s'accommodant des refus sans créer de surpression dans le produit matelassé génératrice de hernie du tissu.

Jusqu'ici, on a considéré qu'on injectait le matériau granulaire dans son état définitif : par exemple, sous forme de billes de polystyrène expansé.

Il est également conforme à l'invention d'injecter le matériau granulaire dans un état intermédiaire : par exemple, sous forme de polystyrène brut, non expansé. Dans ce cas, le tissu du produit matelassé doit être un tissu résistant à la température d'expansion (80-100°), laquelle expansion sera réalisée in situ.

On remplit les boyaux à environ un septième de leur volume et on porte l'ensemble dans un flux d'air chaud alternatif et balayant, pour assurer la mobilité des grains de polystyrène pendant l'expansion et éviter les agglomérats. On peut aussi assurer la mobilité mécanique de la nappe de tissu prise dans un cadre de maintien basculé automatiquement.

L'avantage de ce procédé est qu'il permet de stocker un produit matelassé intermédiaire sous un faible volume, de réduire les coûts de transport, et d'assurer une fermeture aisée du tissu après remplissage. En revanche, il nécessite l'étape ultérieure d'expansion, et le produit définitif obtenu ainsi ne présente pas la tension du tissu observée selon le premier procédé.

On peut également, au lieu de partir d'un polystyrène brut, partir d'un polystyrène semi-pré-expansé dont on achève l'expansion in situ.

## Revendications

1. Dispositif de maintien d'un objet, du type utilisant :
- une enceinte étanche (2, 5, 10, 33, 33', 103) présentant des parois souples, associée à des moyens (4, 7, 16, 41, 110) pour sa mise en dépression,
- un matériau granulaire (3, 39, 39') placé dans l'enceinte (2, 5, 10, 33, 33', 103),
- des éléments (21, 22, 23, 42, 43, 44, 45) de retenue du matériau granulaire (3, 39, 39') en place dans l'enceinte (2, 5, 10, 33, 33', 103) en dehors de toute dépression, lesdits éléments de retenue (21, 22, 23, 42, 43, 44, 45) étant constitués par un matelas de boudins (24) juxtaposés réalisés par des parois (21, 22) en un matériau souple, perméable au gaz mais imperméable au matériau granulaire, qui est logé dans les boudins (24), et assurant seuls la retenue du matériau granulaire (3, 39, 39') indépendamment des parois de l'enceinte (2, 5, 10, 33, 33', 103) elle-même,
caratérisé par un remplissage complet des boudins (24) en matériau granulaire (3, 39, 39'), permettant d'assurer une épaisseur sensiblement constante à l'enceinte (2, 5, 10, 33, 33', 103)

2. Dispositif selon la revendication 1, caractérisé en ce que le matériau souple (21, 22) est une nappe textile (11, 22).

3. Dispositif selon la revendication 2, caractérisé en ce que la nappe textile (21, 22) est partiellement élastique dans une direction transversale à celle des boudins (24).

4. Dispositif de maintien d'un objet, du type utilisant :
- une enceinte étanche (2, 5, 10, 33, 33', 103) présentant des parois souples, associée à des moyens (4, 7, 16, 41, 110) pour sa mise en dépression,
- un matériau granulaire (3, 39, 39') placé dans l'enceinte (2, 5, 10, 33, 33', 103),
- des éléments (21, 22, 23, 42, 43, 44, 45) de retenue du matériau granulaire (3, 39, 39') en place dans l'enceinte (2, 5, 10, 33, 33', 103) en dehors de toute dépression, lesdits éléments de retenue (21, 22, 23, 42, 43, 44, 45) étant souples, perméables au gaz mais imperméables au matériau granulaire (3, 39, 39'), et assurant seuls la retenue du matériau granulaire (3, 39, 39') indépendamment des parois de l'enceinte (2, 5, 10, 33, 33', 103) elle-même,
caractérisé en ce que les éléments de retenue (42, 43, 44, 45) sont constitués par des parois (42, 43) en un matériau fibreux poreux, permettant d'assurer une épaisseur sensiblement constante à l'enceinte (2, 5, 10, 33, 33', 103)

5. Dispositif selon la revendication 4, caractérisé en ce que les parois (42, 43) définissent entre elles des compartiments (46) perméables aux gaz mais pratiquement _{,} imperméables au matériau granulaire (39).

6. Dispositif selon l'une quelconque des revendications 1 à 5, caractérisé en ce que lesdits éléments de retenue (21, 22, 23, 42, 43, 44, 45) sont indépendants des parois de l'enceinte (2, 5, 10, 33, 33', 103) elle-même.

7. Dispositif selon l'une quelconque des revendications 1 à 6, caractérisé en ce que l'enceinte (10) est conformée en enveloppe à l'intérieur de laquelle peut être disposé l'objet à emballer, munie d'un rabat (14) à moyen de fermeture rapide (15).

8. Dispositif selon l'une quelconque des revendications 1 à 7, caractérisé en ce qu'il comporte, accolée à ladite enceinte étanche (33, 33', 103), au moins une deuxième enceinte étanche (32, 32', 102, 118).

9. Dispositif selon la revendication 8, caractérisé en ce que la deuxième enceinte (32, 32', 102, 118) contient un fluide et/ou des granules.

10. Dispositif selon la revendication 9, caractérisé par une troisième enceinte étanche (118) destinée à contenir un fluide, la première enceinte (103) étant interposée entre la deuxième (102) et la troisième enceintes (118).

11. Dispositif selon l'une quelconque des revendications 8 à 10, caractérisé en ce qu'une (32, 32', 102, 118) des enceintes étanches est associée à des moyens de gonflage (41, 119).

12. Procédé de maintien d'un objet, mettant en oeuvre le dispositif selon l'une quelconque des revendications 1 à 11, caractérisé en ce que l'objet (1) est placé à l'intérieur de ladite enceinte (2) au sein dudit matériau granulaire retenu dans les éléments de retenue (21, 22, 23).

13. Procédé de maintien d'un objet, mettant en oeuvre le dispositif selon l'une quelconque des revendications 1 à 11, caractérisé en ce que l'objet (8) est placé à l'extérieur de ladite enceinte (5, 10, 33, 33', 103) et entouré au moins partiellement par elle.

14. Procédé de fabrication du matelas de boudins (20) selon l'une quelconque des revendications 1 à 3, caractérisé en ce qu'il consiste à assembler deux nappes (21, 22) par des coutures longitudinales (23) fermées par une couture transversale (25), et à injecter dans les boyaux (24) obtenus le matériau granulaire.

15. Procédé selon la revendication 14, caractérisé en ce qu'on injecte le matériau granulaire horizontalement, au moyen de tuyaux (130) dont l'extrémité amont, placée au sein d'une réserve (132) de matériau particulaire (134), reçoit un jet d'air comprimé délivré par un injecteur (136) de plus petit diamètre que les tuyaux (130).

## Claims

1. A device for maintaining an object, of the type using :
• a sealed housing (2, 5, 10, 33, 33', 103) having supple walls and associated with means (4, 7, 16, 41, 110) for depressurizing it,
• a granular material (3, 39, 39') placed inside the housing (2, 5, 10, 33, 33', 103),
• retaining elements (21, 22, 23, 42, 43, 44, 45) for retaining the granular material (3, 39, 39') in place inside the housing (2, 5, 10, 33, 33', 103) apart from any depression, said retaining elements (21, 22, 23, 42, 43, 44, 45) being constituted by a mattress of juxtaposed tubes (24) produced by walls (21, 22) in a supple material which is gas-permeable but impermeable to the granular material, which is housed in the tubes (24), and ensuring alone the retaining of the granular material (3, 39, 39'), independently from the walls of the housing (2, 5, 10, 33, 33', 103) itself,
characterized by a complete filling of the tube (24) with the granular material (3, 39, 39'), allowing to ensure a substantially constant thickness of the housing (2, 5, 10, 33, 33', 103).

2. The device according to claim 1, characterized in that the supple material (21, 22) is a textile layer (11, 12).

3. The device according to claim 2, characterized in that the textile layer (21, 22) is partly elastic in a direction transversal to that of the tubes (24).

4. A device for maintaining an object, of the type using :
• a sealed housing (2, 5, 10, 33, 33', 103) having supple walls and associated with means (4, 7, 16, 41, 110) for depressurizing it,
• a granular material (3, 39, 39') placed inside the housing (2, 5, 10, 33, 33', 103),
• retaining elements (21, 22, 23, 42, 43, 44, 45) for retaining the granular material (3, 39, 39') in place inside the housing (2, 5, 10, 33, 33', 103) apart from any depression, said retaining elements (21, 22, 23, 42, 43, 44, 45) being supple, gas-permeable but impermeable to the granular material (3, 39, 39'), and ensuring alone the retaining of the granular material (3, 39, 39'), independently from the walls of the housing (2, 5, 10, 33, 33', 103) itself,
characterized in that the retaining elements (42, 43, 44, 45) are constituted by walls (42, 43) in a porous, fibrous material, allowing to ensure a substantially constant thickness of the housing (2, 5, 10, 33, 33', 103).

5. The device according to claim 4, characterized in. that the walls (42,43) define between them compartments (46) which are gas-permeable but substantially impermeable to the granular material (39).

6. The device according to anyone of claims 1 through 5, characterized in that said retaining elements (21, 22, 23, 42, 43, 44, 45) are independent from the walls of the housing (2, 5, 10, 33, 33', 103) itself.

7. The device according to anyone of claims 1 through 6, characterized in that the housing (10) is in envelope form, inside which envelope can be placed the object to be packed, said envelope being provided with a flap (14) equipped with instant closing means (15).

8. The device according to anyone of claims 1 through 7, characterized in that it comprises at least a second sealed housing (32, 32', 102, 118), adjoined to said sealed housing (33, 33', 103).

9. The device according to claim 8, characterized in that the second housing (32, 32', 102, 118) contains a fluid and/or granules.

10. The device according to claim 9, characterized by a third sealed housing (118) designed to contain a fluid, the first housing (103) being interposed between the second (102) and the third (118) housings.

11. The device according to anyone of claims 8 through 10, characterized in that one (32, 32', 102, 118) of the sealed housings is associated with inflating means (41, 119).

12. A method for maintaining an object, using the device according to anyone of claims 1 through 11, characterized in that the object (1) is placed inside said housing (2), within the granular material retained in the retaining elements (21, 22, 23).

13. A method for maintaining an object, using the device according to anyone of claims 1 through 11, characterized in that the object (1) is placed outside said housing (5, 10, 33, 33', 103) and at least partially surrounded by it.

14. A method for producing the mattress of tubes (20) according to any one of claims 1 through 3, characterized in that it consists in assembling two layers (21, 22) by longitudinal seams (23) closed by a transversal seam (25), and in injecting the granular material into the resulting hoses (24).

15. A method according to claim 14, characterized in that the granular material is injected horizontallly, by means of pipes (130) of which the upstream end, placed in the center of a reserve (132) of particled material (134), receives a jet of compressed air delivered by an injector (136) of a smaller diameter than the pipes (130).

## Patentansprüche

1. Vorrichtung zur Unterstützung eines Gegenstands, von dem Typ die verwendet:
- eine dichte Umhüllung (2, 5, 10, 33, 33', 103) die nachgiebige Seitenwände aufweist, die mit Einrichtungen (4, 7, 16, 41, 110) verbunden ist, um sie in Unterdruck zu versetzen,
- ein granulatartiges Material (3, 39, 39'), das in der Umhüllung (2, 5, 10, 33, 33', 103) angeordnet ist,
- Rücknalteelemente (21, 22, 23, 42, 43, 44, 45) des Granulatmaterials (3, 39, 39') vor Ort in der Umhüllung (2, 5, 10, 33, 33', 103) außerhalb jedes Unterdrucks, wobei die Rückhalteelemente (21, 22, 23, 42, 43, 44, 45) gebildet werden durch eine Matte von Schläuchen oder Würsten (24), die aneinander angeordnet sind und durch Seitenwände (21, 22) aus einem Material ausgeführt sind, das nachgiebig bzw. biegsam, gasdurchlässig jedoch undurchlässig für das Granulatmaterial (3, 39, 39') ist, das untergebracht ist in den Schläuchen (24), und allein den Rückhalt des Granulatmaterials (3, 39, 39') sicherstellen, unabhängig von den Seitenwänden der Umhüllung (2, 5, 10, 33, 33', 103) selbst,
**gekennzeichnet**
durch eine vollständige Füllung der Schlauche (24) mit Granulatmaterial (3, 39, 39'), was erlaubt, eine im wesentlichen konstante Dicke der Umhüllung (2, 5, 10, 33, 33', 103) sicherzustellen.

2. Vorrichtung nach Anspruch 1,
dadurch gekennzeichnet, daß das nachgiebige Material (21, 22) eine Textilbahn (11, 22) ist.

3. Vorrichtung nach Anspruch 2,
dadurch gekennzeichnet, daß die Textilbahn (21, 22) teilweise elastisch in eine Richtung quer zu jener der Schläuche (24) ist.

4. Vorrichtung zur Unterstützung eines Gegenstands, von dem Typ die verwendet:
- eine dichte Umhüllung (2, 5, 10, 33, 33', 103) die nachgiebige Seitenwände aufweist, die mit Einrichtungen (4, 7, 16, 41, 110) verbunden ist, um sie in Unterdruck zu versetzen,
- ein granulatartiges Material (3, 39, 39'), das in der Umhüllung (2, 5, 10, 33, 33', 103) angeordnet ist,
- Rückhalteelemente (21, 22, 23, 42, 43, 44, 45) des Granulatmaterials (3, 39, 39') vor Ort in der Umhüllung (2, 5, 10, 33, 33', 103) außerhalb jedes Unterdrucks, wobei die Rückhalteelemente (21, 22, 23, 42, 43, 44, 45) nachgiebig bzw. biegsam, gasdurchlässig jedoch undurchlässig für das Granulatmaterial (3, 39, 39') sind und allein den Rückhalt des Granulatmaterials (3, 39, 39') sicherstellen, unabhängig von den Wänden der Umhüllung (2, 5, 10, 33, 33', 103) selbst,
**dadurch gekennzeichnet,** daß die Rückhalteelemente (42, 43, 44, 45) aus Seitenwänden (42, 43) aus einem porösen Fasermaterial gebildet sind, was ermöglicht, eine im wesentlichen konstante Dicke der Umhüllung (2, 5, 10, 33, 33', 103) sicherzustellen.

5. Vorrichtung nach Anspruch 4,
dadurch gekennzeichnet, daß die Seitenwände (42, 43) untereinander Abteilungen (46) definieren, die gasdurchlässig, jedoch praktisch undurchlässig für das Granulatmaterial (39) sind.

6. Vorrichtung nach einem der Ansprüche 1 bis 5,
dadurch gekennzeichnet, daß die Rückhalteelemente (21, 22, 23, 42, 43, 44, 45) von den Seitenwänden der Umhüllung (2, 5, 10, 33, 33', 103) selbst unabhängig sind.

7. Vorrichtung nach einem der Ansprüche 1 bis 6,
dadurch gekennzeichnet, daß die Umhüllung (10) als Hülle ausgebildet ist, in deren Innern der einzupackende Gegenstand angeordnet sein kann, versehen mit einer Klappe (14) mit einer Schnellschließeinrichtung (15).

8. Vorrichtung nach einem der Ansprüche 1 bis 7,
dadurch gekennzeichnet, daß sie, angefügt an die dichte Umhüllung (33, 33', 103), wenigstens eine zweite dichte Umhüllung (32, 32', 102, 118) aufweist.

9. Vorrichtung nach Anspruch 8,
dadurch gekennzeichnet, daß die zweite Umhüllung (32, 32', 102, 118) ein Fluid und/oder Granulatteilchen enthält.

10. Vorrichtung nach Anspruch 9,
dadurch gekennzeichnet, daß eine dritte dichte Umhüllung (118) dazu bestimmt ist, ein Fluid zu enthalten, wobei die erste Umhüllung (103) zwischen der zweiten (102) und der dritten (118) angeordnet ist.

11. Vorrichtung nach einem der Ansprüche 8 bis 10,
dadurch gekennzeichnet, daß eine (32, 32', 102, 118) der dichten Umhüllungen mit einer Aufblaseinrichtung (41, 119) verbunden ist.

12. Verfahren zum Halten eines Gegenstandes, das die Vorrichtung nach einem der Ansprüche 1 bis 11 verwirklicht bzw. verwendet, **dadurch gekennzeichnet,** daß der Gegenstand (1) im Innern der Umhüllung (2) innerhalb des Granulatmaterials angeordnet ist, das in den Rückhalteelementen (21, 22, 23) zurückgehalten wird.

13. Verfahren zum Halten eines Gegenstandes, das die Vorrichtung nach einem der Ansprüche 1 bis 11 verwirklicht bzw. verwendet, **dadurch gekennzeichnet,** daß der Gegenstand (8) außerhalb der Umhüllung (5, 10, 33, 33', 103) angeordnet ist und wenigstens teilweise von ihr umgeben ist.

14. Verfahren zum Herstellen von Matten von Schläuchen oder Würsten (20) nach einem der Ansprüche 1 bis 3,
**dadurch gekennzeichnet,** daß es besteht aus Zusammenfügen von zwei Bahnen (21, 22) durch Längsnähte (23), die durch eine Quernaht (25) verschlossen werden, und aus Einspritzen von Granulatmaterial in die erhaltenen Schläuche oder Stränge (24).

15. Verfahren nach Anspruch 14,
**dadurch gekennzeichnet,** daß das Granulatmaterial horizontal mittels Rohren (130) eingespritzt wird, deren stromaufwärtiges Ende, das im Innern eines Vorratsbehälters (132) von bestimmtem Material (134) angeordnet ist, einen komprimierten Luftstrom aufnimmt, der von einem Injektor (136) geliefert wird, der einen geringeren Durchmesser aufweist als die Rohre (130).
